# EUROPÄISCHE PATENTSCHRIFT

(11) **EP 0 536 162 B1**
(45) Veröffentlichungstag und Bekanntmachung des Hinweises auf die Patenterteilung: **01.02.1995**
(21) Anmeldenummer: 91909956.4
(22) Anmeldetag: 28.05.1991
(51) Int. Cl.: H02K 3/51, H02K 3/487

(54) **ANKER FÜR SCHNELLAUFENDE, IN ABRASIVSTAUBHALTIGER LUFT ZWANGSBELÜFTETE ELEKTROMOTOREN**
ARMATURE FOR HIGH-SPEED FORCED-VENTILATION ELECTRIC MOTORS RUNNING IN AIR CONTAINING ABRASIVE DUST
INDUIT POUR MOTEURS ELECTRIQUES A GRANDE VITESSE, A VENTILATION FORCEE, FONCTIONNANT DANS DE L'AIR CONTENANT DE LA POUSSIERE ABRASIVE

(30) Priorität: 23.06.1990 DE 9007029 U
(43) Veröffentlichungstag der Anmeldung: 14.04.1993
(73) Patentinhaber: ROBERT BOSCH GMBH, 70442 Stuttgart (DE)
(72) Erfinder: KIRN, Manfred, D-7000 Stuttgart 80 (DE); GRAMMER, Werner, D-7000 Stuttgart 80 (DE); KRÄMER, Gerhard, D-7447 Aichtal-Neuenhaus (DE); EULE, Meinhard, D-7447 Aichtel-Neuenhaus (DE)
(86) Internationale Anmeldenummer: DE9100456
(87) Internationale Veröffentlichungsnummer: WO9200626

(56) Entgegenhaltungen:
- DE-B- 1 763 508
- FR-A- 2 432 792
- GB-A- 190 521
- GB-A- 994 369
- US-A- 2 078 024
- US-A- 2 465 820

## Beschreibung

### Stand der Technik

Die Erfindung betrifft einen Anker mit den Merkmalen des Oberbegriffs des Anspruchs 1.

Ein der Gattung der Erfindung nahekommender Anker ist aus der DE-AS 1 538 908 bekannt. Dieser Anker hat zwar einen verhältnismäßig sicher fixierten, gegen Fliehkräfte gesicherten Übergang der Wicklung zwischen einem Wickelkopf und einem Kommutator, jedoch sind die Wickelköpfe bzw. die in den Nuten des Ankerblechpaketes liegenden Wicklungen nicht durch gesonderte Mittel gesichert. Derartig ausgestaltete Anker halten den Belastungen, denen moderne Elektrowerkzeuge ausgesetzt sind, nicht stand, da sie mit Prellschlägen und Schwingungen, wie sie beispielsweise an Schlagbohrmaschinen oder Winkelschleifern auftreten, überfordert sind. Hinzu kommt die bei derartigen Maschinen übliche hohe Belastung durch abrasivstaubhaltige Umgebungsluft, die zur Zwangskühlung verwendet wird, durch die die Wickelköpfe abgeschliffen und so der Anker zerstört wird.

### Vorteile der Erfindung

Anker mit den kennzeichnenden Merkmalen des Anspruchs 1 haben den Vorteil, daß eine aus den bisher ohnehin üblichen Nutverschlüssen bestehende Armierung besonders einfach herstellbar ist. Diese kann die die Wicklung lockernden oder zerreißenden, starken mechanischen Schwingungen aufnehmen, wie sie beispielsweise bei Verwendung in Schlagbohrmaschinen oder Winkelschleifern auftreten. Sie schützt aber auch die Wickelköpfe sowohl gegen Abschleifen durch abrasivstaubhaltige Kühlluft als auch gegen die Wirkung von Fliehkräften bei Höchstdrehzahlen des Ankers und verbessert zusätzlich die Kühlung des Elektromotors infolge der Ventilatorwirkung der rippenartigen Wülste auf den Wickelköpfen.

Die Merkmale der folgenden Ansprüche dienen der vorteilhaften Ausgestaltung derErfindung.

### Zeichnung

Die Erfindung ist nachstehend in der Beschreibung anhand einer zugehörigen Zeichnung erläutert.

### Beschreibung des Ausführungsbeispiels

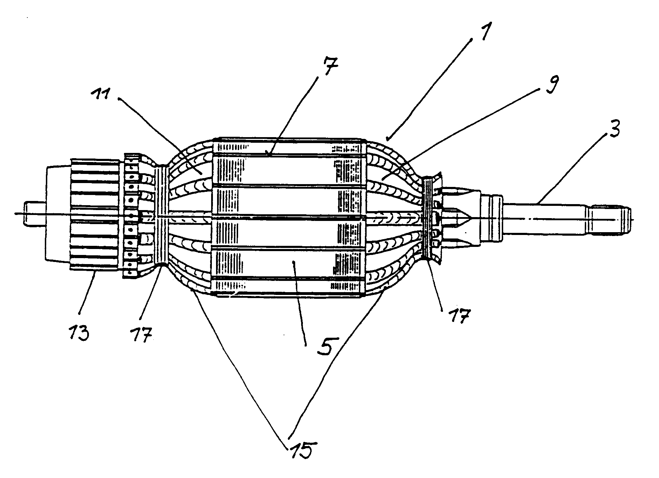

Ein in der Zeichnung gezeigtes Ausführungsbeispiel eines Ankers 1 besteht aus einer Ankerwelle 3, die ein Ankerblechpaket 5 mit Nuten 7 trägt. Durch die Nuten 7 sind aus einem elektrischen Leiter bestehende Wicklungen geführt, die ankerstirnseitige Wickelköpfe 9, 11 bilden bzw. mit ihren Enden an einen Kollektor 13 angeschlossen sind.

Die Nuten 7 sind mit mit Träufelharz behandelten Nutverschlüssen 15 ausgefüllt. Die Nutverschlüsse 15 bestehen aus etwa 3mm starkem Papierstrick oder Textilgewebestrick und sind in die Nuten 7 eingepreßt, so daß die Wicklungen fest auf dem Nutgrund gehalten sind und sich auch bei hohen Fliehkräften nicht aus den Nuten 7 herausbewegen können. Die Enden der Nutverschlüsse 15 sind mittels einer Schnurwicklung 17 auf der Taille der Wickelköpfe gehalten und bilden so eine rippenartige Armierung der Ankerstirnseiten bzw. der Wickelköpfe 9, 11.

In einem weiteren, nichtdargestelltem Ausführungsbeispiel wird die Schnurwicklung durch ein oder mehrere überlange Nutverschlüsse gebildet, deren Überlänge ein- oder mehrfach um die Taillen der Wickelköpfe über den Enden der Nutverschlüssen geschlungen und fixiert sind, etwa durch Knoten oder Verkleben.

In einem weiteren nichtdargestellten Ausführungsbeispiel können anstelle der Schnurwicklungen Ringe, beispielsweise Gummiringe, angeordnet sein, die durch entsprechende Elastizität und Vorspannung bzw. durch Verformen fest auf den Enden der Nutverschlüsse und den kleinesten Durchmessern der Wickelköpfe sitzen.

Ein vorteilhaftes Ausführungsbeispiel ergibt sich dadurch, daß die Nutverschlüsse aus plastischem Werkstoff bestehen, der nach dem Befestigen auf dem Anker noch für eine begrenzte Zeit verformbar ist und den Konturen der Wickelköpfe entsprechend angepaßt werden bzw. für eine eventuelle Strömungsverbesserung, z.B. zur Erhöhung der Ventilatorwirkung, geändert werden kann.

Bei allen Ausführungsbeispielen sind die Nutverschlüsse (15) mit Träufelharz benetzt, so daß eine besonders feste Verbindung zwischen den Nutverschlüssen und den Wicklungsköpfen besteht.

## Patentansprüche

1. Anker (1) mit Ankerwelle (3) für schnellaufende, in abrasivstaubhaltiger Luft zwangsbelüftete Elektromotoren mit Kollektor (13), insbesondere in Elektrowerkzeugen, vorzugsweise Winkelschleifern, mit in Nuten (7) eines Ankerblechpaketes (5) eingelegten Wicklungen, die an den Stirnenden des Ankers (1) bis zur Ankerwelle (3) führende Wickelköpfe (9, 11) mit etwa kugeliger Kontur bilden, die nahe der Ankerwelle (3) durch eine Schnurwicklung (17) gehalten werden, dadurch gekennzeichnet, daß die Wicklungen in den Nuten (7) durch längliche, elastische Nutverschlüsse (15) niedergehalten werden, wobei mindestens einer, vorzugsweise mehrere, der Nutverschlüsse (15) axial über die Nuten (7) hinaus im ganzen der Kontur der Wickelköpfe (9, 11), insbesondere entlang von Mantellinien bis zur Ankerwelle (3) hin, in Ankerlängsrichtung folgen, dabei rippenartige Wülste bilden und an den Stirnenden des Ankers (1) ebenfalls von der Schnurwicklung (17) gehalten werden.

2. Anker nach Anspruch 1, dadurch gekennzeichnet, daß die Schnurwicklung (17) durch einen oder mehrere der Nutverschlüsse (15) selbst gebildet wird.

3. Anker nach Anspruch 2, dadurch gekennzeichnet, daß an den Stirnenden des Ankers Ringe die Nutverschlüsse (15) festhalten.

4. Anker nach einem der Ansprüche 1 bis 3, dadurch gekennzeichnet, daß die Enden der Nutverschlüsse (15), die Schnurwicklung (17) und/oder die Ringe mit Träufelharz verfestigt am Anker fixiert sind.

5. Anker nach einem der Ansprüche 1 bis 4, dadurch gekennzeichnet, daß die Nutverschlüsse (15) in die Ankernuten (7) eingesetzte band- oder strickartige Körper sind,

6. Anker nach einem der Ansprüche 1 bis 5, dadurch gekennzeichnet, daß die Nutverschlüsse (15) aus gewirkten Fasern bestehen.

7. Anker nach einem der Ansprüche 1 bis 6, dadurch gekennzeichnet, daß die Nutverschlüsse (15) nach dem Einsetzen in die Nuten (7) plastisch verformbar sind.

## Claims

1. Armature (1) having an armature shaft (3) for high-speed electric motors which are force-ventilated in air containing abrasive dust and have a collector (13), in particular in electric tools, preferably right angle grinders, having windings which are laid in slots (7) of an armature laminate stack (5), which form on the end faces of the armature (1) winding overhangs (9, 11) which lead up to the armature shaft (3) having approximately spherical contour, and are held near the armature shaft (3) by a cord winding (17), characterised in that the windings are held down in the slots (7) by elongated, elastic slot seals (15), at least one, preferably a plurality, of the slot seals (15) following as a whole axially out over the slots (7) the contour of the winding overhangs (9, 11), in particular along surface lines, up to the armature shaft (3) in the armature longitudinal direction, forming rib-like bulges in the process, and being held likewise by the cord winding (17) on the end faces of the armature (1).

2. Armature according to Claim 1, characterised in that the cord winding (17) is formed by one or more of the slot seals (15) themselves.

3. Armature according to Claim 2, characterised in that rings fix the slot seals (15) on the end faces of the armature.

4. Armature according to one of Claims 1 to 3, characterised in that the ends of the slot seals (15), the cord winding (17) and/or the rings are fixed in a solidified manner on the armature with impregnated resin.

5. Armature according to one of Claims 1 to 4, characterised in that the slot seals (15) are strip-like or cord-like elements inserted into the armature slots (7).

6. Armature according to one of Claims 1 to 5, characterised in that the slot seals (15) consist of knitted fibres.

7. Armature according to one of Claims 1 to 6, characterised in that the slot seals (15) can be plastically deformed after insertion into the slots (7).

## Revendications

1. Induit (1) comportant un arbre d'induit (3) pour des moteurs électriques tournant rapidement, et ventilés par une circulation forcée d'air chargé de poussières abrasives, comprenant un collecteur (13), notamment pour des outils électroportatifs, de préférence des tronçonneuses, dont les enroulements sont logés dans les rainures (7) d'un paquet de tôles d'induit (5) et forment des têtes d'enroulement (9, 11) à contour sensiblement sphérique au niveau des extrémités frontales de l'induit (1) jusqu'à l'arbre d'induit (3), ces têtes étant maintenues au niveau de l'arbre (3) de l'induit par un enroulement de fil (17), caractérisé en ce que les enroulements sont maintenus enfoncés dans les rainures (7) par des moyens de fermeture à rainures (15), élastiques, longitudinaux, et au moins l'un, et de préférence plusieurs, des moyens de fermeture à rainures (15) se poursuit axialement au-delà des rainures (7) sur tout le contour des têtes d'enroulement (9, 11), notamment le long des génératrices jusqu'à l'arbre (3) de l'induit, suivant la direction longitudinale de l'induit, en formant des bourrelets en nervure et en étant également maintenus par l'enroulement de fil (17) au niveau des extrémités frontales de l'induit (1).

2. Induit selon la revendication 1, caractérisé en ce que les enroulements de fil (17) sont formés directement par un ou plusieurs moyens de fermeture à rainures (15).

3. Induit selon la revendication 2, caractérisé en ce que des anneaux maintiennent les moyens de fermeture à rainures (15) au niveau des extrémités frontales de l'induit.

4. Induit selon l'une des revendications 1 à 3, caractérisé en ce que les extrémités des moyens de fermeture à rainures (15), les enroulements de fil (17) et/ou les bagues sont fixés sur l'induit de manière renforcée par un vernis d'imprégnation.

5. Induit selon l'une des revendications 1 à 4, caractérisé en ce que les moyens de fermeture à rainures (15) sont des éléments en forme de ruban ou de cordon introduits dans les rainures (7) de l'induit.

6. Induit selon l'une des revendications 1 à 5, caractérisé en ce que les moyens de fermeture à rainures (15) sont des fibres tricotées.

7. Induit selon l'une des revendications 1 à 6, caractérisé en ce que les moyens de fermeture à rainures (15) sont déformables plastiquement après leur mise en place dans les rainures (7).
